# DEMANDE DE BREVET EUROPEEN

(11) **EP 1 808 831 A1**
(43) Date de publication de la demande: **18.07.2007**
(21) Numéro de dépôt: 07105264.1
(22) Date de dépôt: 11.05.2000
(51) Int. Cl.: G07F 7/10, G06K 7/06, H04Q 7/32

(54) **Préparation et exécution d'un programme dans une carte à puce additionnelle d'un terminal**

(30) Priorité: 03.06.1999 FR 9907060
(62) Demande divisionnaire de: 00925428.5
(71) Demandeur: GEMPLUS, 13420 Gémenos (FR)
(72) Inventeur: Basquin, Bruno, 13006, MARSEILLE (FR); Niccolini, Marc, 13100, AIX EN PROVENCE (FR)

(57) **Abrégé**

Procédé pour préparer et exécuter une session de coopération avec une deuxième carte à puce (C2) introduite dans un terminal (TE) en addition d'une première carte à puce (C1) contenant des données liées au possesseur de la première carte, permettant que les données de la deuxième carte (C2) soient communiquées au terminal (TE) par l'intermédiaire d'interrogations de la deuxième carte (c2) par la première carte (C1) et de transmission de résultats de ces interrogations par la première carte (c1) au terminal. Par exemple, le terminal est un terminal radiotéléphonique mobile avec une carte SIM en tant que première carte.

## Description

La présente invention concerne la mise en oeuvre de programmes applicatifs fournis au moyen d'une carte à puce additionnelle insérable dans un terminal. Particulièrement, le terminal est un terminal radiotéléphonique mobile incluant une première carte pour l'identification d'abonné et les communications avec un réseau de télécommunications, ainsi qu'un lecteur de carte à puce additionnelle.

Dans un réseau de radiotéléphonie cellulaire de type GSM, il est prévu de fournir à l'abonné des services applicatifs basés sur l'exécution de programmes applicatifs au sein de la carte à puce SIM. Ces services sont mis en oeuvre par une technologie normalisée communément appelée SIM Application Toolkit. Une fonctionnalité particulière appelée la pro-activité permet à la carte SIM, dans le déroulement d'un programme, d'adresser des requêtes au monde extérieur : le terminal, l'abonné et le réseau.

Par exemple, de tels programmes applicatifs comprennent des menus pour interroger un serveur bancaire et conduire à distance des opérations bancaires à partir du terminal. Le développement des applications de services à valeur ajoutée s'exécutant dans la carte SIM nécessite des moyens de distribution et de maintenance de ces applications en cours d'abonnement. Cela est possible en personnalisant la carte SIM avec des programmes adéquats avant sa remise à l'abonné, ou en téléchargeant par voie radio ou en chargeant directement dans un point de vente ces programmes dans la carte SIM.

La personnalisation de la carte SIM est contraignante en obligeant à fixer à l'avance le service et l'application. Elle est complexe : pour un opérateur déterminé, il faut créer autant de lots de personnalisation qu'il y a de types de service.

Le téléchargement de programmes applicatifs par la voie radio en cours de vie de la carte SIM n'est actuellement pas utilisé, les canaux de transmission disponibles, par leur faible débit, n'étant pas adaptés.

La troisième possibilité est également contraignante puisque tous les points de vente doivent être équipés avec un moyen nécessaire à l'interfaçage des cartes SIM avec le dispositif de chargement de programme.

La technique antérieure prévoit également une carte à puce additionnelle qui est distincte de la carte SIM, et qui est insérable dans le terminal ou peut être reliée au terminal de la carte SIM par un lecteur externe. La deuxième carte est contrôlée par un programme s'exécutant dans la carte SIM. Le terminal joue un rôle transparent, en transmettant simplement les commandes élaborées par la carte SIM vers la deuxième carte. Cet échange de commandes vise à développer des services mettant en oeuvre tout type de carte à puce. Par exemple, la deuxième carte est une carte bancaire pour offrir ainsi des services de télépaiement sur le terminal mobile.

La deuxième carte devient un moyen de distribution d'applications en transportant des programmes réalisant des services à valeur ajoutée tels que ceux que l'on peut trouver actuellement dans la carte SIM.

Plusieurs possibilités directement dérivées de l'application actuelle des commandes SIM Toolkit sont envisageables.

Selon la première possibilité, le programme applicatif est téléchargé depuis la deuxième carte dans la carte SIM par l'intermédiaire des moyens logiciels de lecteur de cartes multiples ("multiple cardreader") de l'application Toolkit, pour que le programme soit exécuté dans la carte SIM.

Selon une deuxième possibilité, le programme est exécuté dans la deuxième carte. Le programme est lancé sous la commande de la carte SIM qui laisse ensuite l'initiative des échanges des commandes et réponses pour l'exécution du programme au terminal TE qui communique directement avec la deuxième carte.

Selon une troisième possibilité, le programme est téléchargé depuis la deuxième carte dans le terminal TE et est exécuté dans un environnement logiciel d'exécution implémenté initialement à cet effet dans le terminal.

L'invention a pour objectif de mettre en oeuvre un programme applicatif dans une carte additionnelle en ne faisant appel qu'à des types d'échanges disponibles au niveau du terminal et de la première carte.

Cet objectif est atteint au moyen de l'invention telle que précisée dans les revendications jointes.

A cette fin, un procédé pour préparer l'exécution d'un programme, typiquement un programme proactif, et exécuter le programme dans une deuxième carte à puce introduite dans un terminal en addition d'une première carte à puce contenant des données liées au possesseur de la première carte, est caractérisé en ce que la deuxième carte communique avec le terminal par l'intermédiaire d'échanges de commandes et réponses entre les deux cartes relayés par des échanges de commandes et réponses entre la première carte et le terminal.

Ainsi, selon l'invention, tous les échanges typiquement proactifs entre le terminal et la deuxième carte sont effectués à travers la première carte qui apparaît, pour le terminal, comme l'exécutant du programme.

Dans le cas où le terminal est un terminal radiotéléphonique mobile, la première carte est une carte SIM. A la différence de la deuxième possibilité envisageable précitée, il n'est pas nécessaire selon l'invention de prévoir une deuxième interface entre le terminal et la deuxième carte, supportant le protocole SIM Toolkit. Selon l'invention, une interface de protocole SIM Toolkit est installée entre les deux cartes, le terminal jouant le rôle de relais transparent.

Dans la description détaillée plus loin, le terminal est relié à un réseau de télécommunications, tel qu'un réseau de radiotéléphonie. Toutefois, le terminal peut être un dispositif autonome, ou être relié à un réseau tel que le réseau téléphonique commuté ou un réseau numérique à intégration de service ou un réseau téléphonique de transmission de données spécialisé ou privé.

Afin de vérifier une compatibilité de la deuxième carte avec le terminal, le procédé de l'invention comprend une lecture de caractéristiques pour l'exécution du programme dans la deuxième carte depuis la première carte en réponse à une introduction de la deuxième carte dans un moyen de lecture relié au terminal, et une analyse des caractéristiques comparativement à des capacités matérielles et logicielles de la première carte et/ou du terminal pour refuser la deuxième carte lorsque lesdites caractéristiques sont incompatibles avec au moins le terminal.

Lors de la préparation d'exécution, le procédé peut comprendre une étape de transmettre des caractéristiques logicielles et matérielles du terminal depuis la première carte à la deuxième carte pour adapter la deuxième carte au terminal.

Lors de la préparation de l'exécution d'un programme, le procédé de l'invention comprend de préférence également les étapes de:
- lire depuis la première carte un deuxième menu dans la deuxième carte ;
- combiner dans la première carte le deuxième menu avec un premier menu contenu dans la première carte en un menu général ; et
- transmettre le menu général depuis la première carte au terminal afin de remplacer le premier menu par le menu général dans le terminal.

De cette manière, l'abonné peut accéder par un unique menu à tous les programmes applicatifs contenus dans les deux cartes.

Selon une variante, à la place de l'étape de combiner, il est prévu une étape pour remplacer un item prédéterminé dans le premier menu par le deuxième menu afin de former le menu général.

Pour l'exécution du programme, le procédé de l'invention peut comprendre les étapes de :
- transmettre un identifiant du programme depuis le terminal à la première carte ;
- lire dans la première carte le lieu de localisation du programme en correspondance avec l'identifiant ;
- exécuter le programme par session pro-active dans la première carte si le programme est localisé dans la première carte ; et
- exécuter le programme par session pro-active dans la deuxième carte si le programme est localisé dans la deuxième carte.

Ainsi, pour l'exécution d'un programme dans la deuxième carte, chaque commande ou réponse transite à travers la première carte.

D'autres caractéristiques et avantages de la présente invention apparaîtront plus clairement à la lecture de la description suivante de plusieurs réalisations préférées de l'invention en référence aux dessins annexés correspondants dans lesquels:
- la figure 1 est un bloc-diagramme d'un réseau de radiotéléphonie cellulaire avec un terminal mobile détaillé ;
- la figure 2 est un algorithme d'étapes principales de la préparation de l'exécution d'un programme applicatif selon l'invention ; et
- la figure 3 est un algorithme d'étapes pour l'exécution du programme succédant à la préparation.

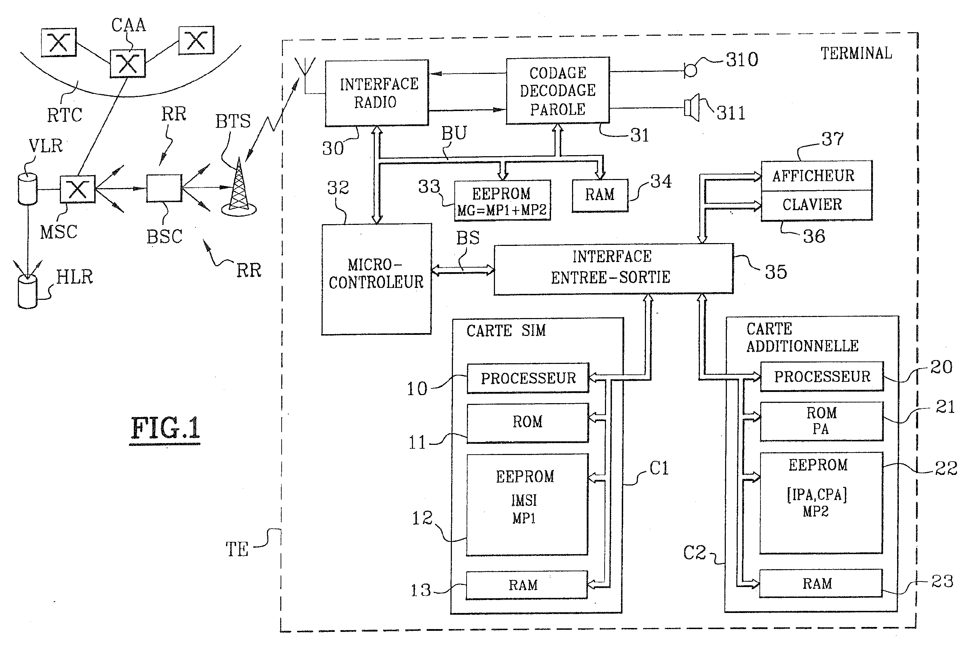

On se réfère, à titre d'exemple, au contexte d'un réseau de télécommunications du type réseau de radiotéléphonie cellulaire numérique RR de type GSM, comme montré à la figure 1. Un terminal radiotéléphonique mobile TE du réseau de radiotéléphonie comprend une première carte à puce C1 constituant un module à microprocesseur amovible du terminal, dite carte SIM (Subscriber Identity Mobile), ainsi qu'une deuxième carte à puce C2, dite carte applicative additionnelle, soit reliée au terminal TE par l'intermédiaire d'un lecteur de carte distinct du terminal, soit logée de manière amovible dans le terminal.

Dans la figure 1, le réseau RR est schématisé par un commutateur du service mobile MSC pour la zone de localisation où le terminal mobile TE se trouve à un instant donné, et une station de base BTS reliée au commutateur MSC par un contrôleur de station de base BSC et au terminal TE par voie radio. Les entités MSC, BSC et BTS constituent principalement un réseau fixe à travers lequel sont transmis notamment des messages de signalisation à canaux sémaphores, de contrôle, de données et de voix. L'entité principale du réseau RR susceptible d'interagir avec la première carte dans le terminal TE est le commutateur de service mobile MSC associé à un enregistreur de localisation des visiteurs VLR et relié à au moins un commutateur téléphonique à autonomie d'acheminement CAA du réseau téléphonique commuté RTC. Le commutateur MSC gère des communications pour des terminaux mobiles visiteurs, y compris le terminal TE, se trouvant à un instant donné dans la zone de localisation desservie par le commutateur MSC. Le contrôleur de station de base BSC gère notamment l'allocation de canaux aux terminaux mobiles visiteurs, et la station de base BTS couvre la cellule radioélectrique où le terminal MS se trouve à l'instant donné.

Le réseau de radiotéléphonie RR comprend également un enregistreur de localisation nominal HLR relié aux enregistreurs VLR et analogue à une base de données contenant l'identité de chaque abonné possesseur de la carte SIM, le profil d'abonnement de l'abonné et le numéro de l'enregistreur VLR auquel est rattaché momentanément le terminal mobile.

Le terminal TE détaillé à la figure 1 comprend une interface radio 30 avec le réseau de radiotéléphonie RR, comprenant principalement un duplexeur de voies de transmission et de réception, des circuits de transposition de fréquence, des convertisseurs analogique-numérique et numérique-analogique, un modulateur et un démodulateur, et un circuit de codage et décodage de canal. Le terminal TE comprend également un circuit de codage et décodage de parole 31 relié à un microphone 310 et un haut-parleur 311, un microcontrôleur 32 associé à une mémoire non volatile de programmes EEPROM 33 et une mémoire de données RAM 34, et une interface entrée-sortie 35 desservant les cartes à puce C1 et C2, un clavier 36 et un afficheur graphique 37. Le microcontrôleur 32 est relié par un bus BU à l'interface 30, au circuit 31, et aux mémoires 33 et 34 et par un autre bus BS à l'interface entrée-sortie 35. Le microcontrôleur 32 gère tous les traitements des données en bande de base que le terminal reçoit et transmet après transposition en fréquence, notamment relatifs aux couches de protocole 1, 2 et 3 du modèle ISO, et supervise des échanges de données entre le réseau RR à travers l'interface radio 30 et la première carte à puce C1 à travers l'interface entrée-sortie 35.

La carte à puce SIM C1 est reliée à l'interface entrée-sortie 35 incluant au moins un lecteur de carte dans le terminal, et des prises périphériques du terminal mobile. La carte à puce C1 contient principalement un microprocesseur 10, une mémoire 11 de type ROM incluant un système d'exploitation de la carte et des algorithmes de communication et d'application spécifiques selon l'invention, une mémoire non volatile 12 de type EEPROM qui contient toutes les caractéristiques liées à l'abonné, notamment l'identité internationale de l'abonné IMSI, et une mémoire 13 de type RAM destinée essentiellement au traitement de données à recevoir du microcontrôleur 32 inclus dans le terminal et la deuxième carte C2 et à transmettre vers ceux-ci.

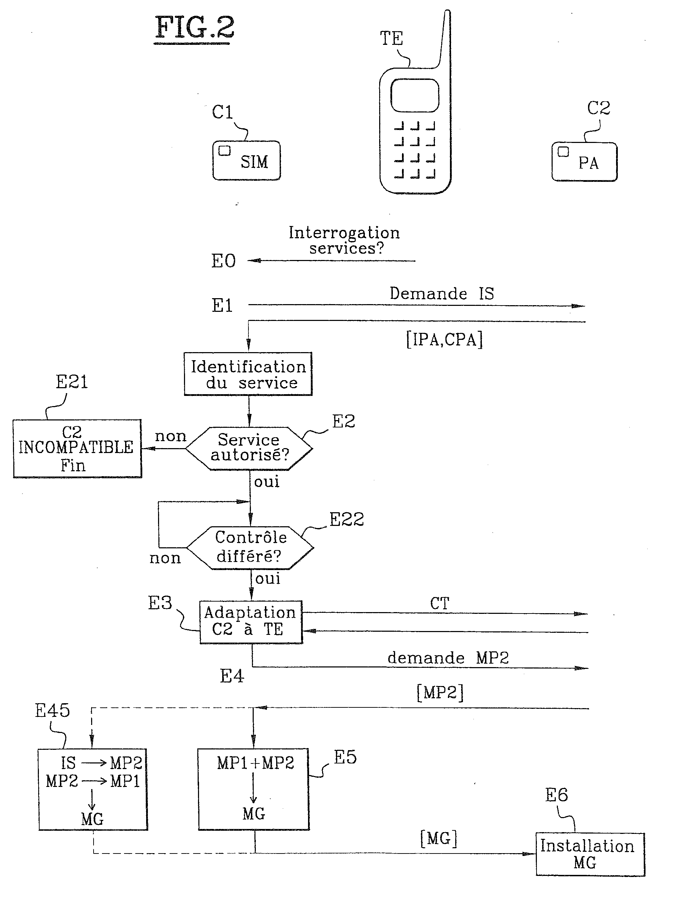

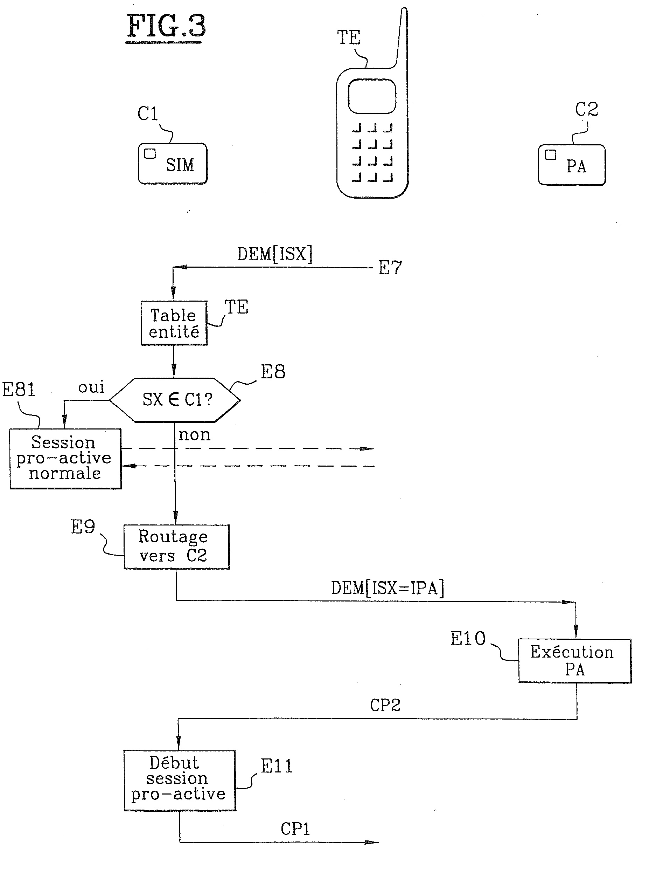

Selon l'invention, plusieurs logiciels sont principalement téléchargés dans les mémoires ROM 11 et EEPROM 12 pour gérer des applications dans des cartes additionnelles C2. En particulier, l'algorithme de préparation selon l'invention montré à la figure 2 et l'algorithme d'exécution avec une session pro-active selon la figure 3 sont implémentés dans les mémoires 11 et 12.

Comme la carte SIM C1, la deuxième carte C2 comprend également un microprocesseur 20, une mémoire ROM 21 incluant un système d'exploitation de la carte C2 et au moins partiellement un programme applicatif PA, ou en variante plusieurs programmes applicatifs, spécifiques selon l'invention, une mémoire non volatile 12 de type EEPROM contenant, selon l'invention, un identifiant IPA du programme applicatif ainsi que des caractéristiques CPA requises pour l'exécution du programme, ou en variante des programmes, et une mémoire RAM 13 qui traite des données à recevoir du microcontrôleur 32 et du processeur 10. La carte C2 est par exemple une carte bancaire, une carte de porte-monnaie électronique, une carte de jeux, ou une carte de visite ; dans ce dernier cas, la carte de visite est destinée à insérer le nom et le numéro de téléphone de la personne ayant remis la carte dans le répertoire téléphonique de la carte SIM et/ou à appeler automatiquement ladite personne.

Les mémoires ROM et EEPROM 11, 12, 21 et 22 dans les cartes C1 et C2 comprennent des logiciels de communication pour dialoguer d'une part avec le microcontrôleur 32 du terminal TE, d'autre part entre les processeurs 10 et 20 à travers le terminal TE, c'est-à-dire à travers le microcontrôleur 32 et l'interface entrée-sortie 36.

Pour dialoguer entre elles, la carte SIM C1 et la carte additionnelle C2 sont du type pro-active afin de déclencher des actions dans le terminal mobile MS au moyen de commandes pré-formatées suivant le protocole "T = 0" de la norme ISO 7816-3 et encapsulées selon la recommandation GSM 11.14 (SIM Toolkit). Cette recommandation permet une extension du jeu de commandes du système d'exploitation inclus dans la mémoire 11, 21 de la carte à puce C1, C2 pour mettre à disposition de l'autre carte C2, C1 des données transmises par la carte à puce C1, C2.

Comme on le verra dans la suite, le terminal TE est transparent aux échanges de commandes et réponses entre les cartes C1 et C2 et ne peut communiquer directement avec la deuxième carte C2, mais seulement par l'intermédiaire d'échanges de commandes et réponses entre la première carte C1 et le terminal TE. Le terminal TE ne supporte ainsi le protocole SIM Toolkit que dans le moyen 32-35 s'interfaçant avec la première carte C1, et aucun protocole SIM Toolkit n'est prévu directement entre le microcontrôleur 32 et le processeur 20 de la carte C2.

Comme montré à la figure 2, la préparation d'exécution d'un programme applicatif PA contenu dans la deuxième carte C2 comprend six étapes principales E1 à E6. Initialement, le procédé de pré-contrôle est déclenché à une étape E0 soit manuellement en sollicitant une touche de validation prédéterminée sur le clavier du terminal TE ou en validant une directive "VALIDER INSERTION CARTE ADDITIONNELLE" affichée sur l'écran du terminal après avoir insérée la carte C2 dans le lecteur, soit automatiquement par le terminal TE en réponse à un message de présence de carte transmis par le lecteur distinct du terminal TE ou intégré à l'interface entrée-sortie 35, comme celui de la carte C1. Le terminal TE invite alors la première carte C1, la carte SIM, à interroger la deuxième carte C2.

Selon la réalisation illustrée à la figure 2, tout se passe au cours des étapes suivantes E1 à E5, comme si le terminal TE, en fait le microcontrôleur 32 et l'interface entrée-sortie 35, est transparent aux données échangées entre les deux cartes.

A l'étape suivante E1, la carte C1 lit et mémorise en mémoire EEPROM 12 des informations de service IS dans la mémoire EEPROM 22 de la carte C2 à travers le terminal TE. Les informations de service contiennent l'identifiant IPA du programme applicatif PA et les caractéristiques CPA requises pour l'exécution du programme. Les caractéristiques CPA sont notamment un type d'environnement logiciel, une capacité de mémoire et des paramètres matériels du terminal TE nécessaires à l'exécution du programme PA, ainsi qu'une interdiction ou autorisation d'exécution du programme PA en dehors de la deuxième carte CA. La première carte C1, grâce aux informations IS lues dans la deuxième carte C2, a ainsi connaissance de la nature de l'application correspondant au programme applicatif contenu dans la deuxième carte.

Si à l'étape suivante E2, la première carte C1 constate une incompatibilité du terminal TE, y compris la carte SIM C1, avec les caractéristique de programme applicatif CPA, la carte C1 refuse de poursuivre le procédé de préparation à une étape E21, et signale un refus au terminal TE pour qu'il affiche un message "CARTE ADDITIONNELLE INCOMPATIBLE".

Dans le cas contraire, la carte C1 décide de poursuivre ou de ne pas poursuivre la préparation à une étape intermédiaire E22. Si la carte C1 ne poursuit pas immédiatement la préparation, par exemple en raison d'un appel du terminal, la carte C1 diffère la préparation pour ultérieurement le faire exécuter localement dans la carte C2.

Si, après l'étape E22, la première carte C1 poursuit la préparation, la deuxième carte C2 est mise dans un état propice à l'exécution du programme applicatif PA. A l'étape suivante E3, la première carte SIM C1 reproduit dans la deuxième carte C2 les résultats de la négociation protocolaire concernant les possibilités d'exécution du terminal TE que la carte C1 a elle-même subies avec le terminal après l'enfichage préliminaire de la carte C1 dans le terminal. L'étape E3 consiste essentiellement à transmettre des caractéristiques logicielles et matérielles CT du terminal TE et le cas échéant de la première carte C1 par la première carte à la deuxième carte C2 pour que la carte C2 s'adapte aux caractéristiques CT.

La première carte C1 déclenche ensuite la combinaison d'un menu principal MP1 listant des applications contenues dans la carte C1 avec un menu principal MP2 du programme applicatif PA, ou en variante des programmes applicatifs, contenus dans la deuxième carte C2. Cette combinaison de menus comporte trois étapes E4, E5 et E6.

A l'étape E4, la carte SIM C1 transmet un message de demande du menu principal MP2 qui est lu en mémoire EEPROM 22 de la carte C2 et transmis vers la mémoire RAM 13 de la carte C1. La carte SIM C1 construit alors à l'étape E5 un menu général MG en ajoutant au menu principal MP1 listant les services déjà proposés par la première carte C1, le menu principal MP2 du service additionnel relatif au programme PA dispensé par la carte C2. Le menu général MG est transmis par la carte C1 au terminal TE afin qu'il soit écrit en mémoire EEPROM 33, en remplacement du premier menu MP1, et accessible à l'abonné par déroulement sur l'afficheur 37, à l'étape E6.

En variante, le premier menu principal MP1 déjà installé dans la mémoire EEPROM 33 du terminal contient un item supplémentaire IS pour valider la sélection d'un menu dans une carte additionnelle, telle que la carte C2. A une étape intermédiaire E45 remplaçant l'étape E5 entre les étapes E4 et E6, l'item supplémentaire IS est remplacé par le deuxième menu MP2 reçu dans la carte C1 pour être combiné au menu MP1 en le menu général MG.

En référence à la figure 3, le lancement d'une exécution de programme avec une session pro-active dans l'une ou l'autre des cartes C1 et C2 comprend les étapes suivantes E7 à E11.

Au moyen d'une touche spécifique, touche ascenseur ou touche de navigation du clavier 36, un programme applicatif de service SX est sélectionné par l'abonné à l'étape E7 ; le terminal TE adresse dans une demande DEM[ISX] l'identifiant ISX du programme sélectionné SX à la première carte C1.

La carte C1 distingue les programmes appartenant au premier menu MP1 des programmes appartenant au deuxième menu MP2 à l'étape E8. Une table d'entité TE dans la carte C1 est adressée par chaque identifiant de programme pour y lire l'entité de localisation de celui-ci, la première carte C1 ou l'une C2 de deuxièmes cartes. Lorsque le programme SX est un programme initialement contenu en mémoires 11-12 de la carte C1, la carte C1 ordonne au moins une session pro-active normale entre celle-ci et le terminal pour exécuter le programme SX à l'étape E81.

Par contre, lorsque le programme SX est le programme PA, la carte C1 convertit la demande de programme DEM[ISX] transmise par le terminal en une autre demande pro-active DEM[ISX=IPA] transmise de la carte C1 vers la deuxième carte C2 à l'étape E9 de manière à lancer l'exécution du programme PA contenu dans la carte C2 à l'étape E10. Comme illustré à la figure 3, l'exécution du programme PA comprend au moins une session pro-active E11 consistant d'abord en une réponse pro-active CP2 transmis par la deuxième carte C2 à la suite de la commande DEM [ISX = IPA] vers la première carte C1, qui elle-même relaie cette commande CP2 en une commande pro-active analogue CP1 vers le terminal TE.

L'exécution du programme PA fournit un service à l'abonné par exemple par affichage de menus textuels sur l'afficheur 37, acquisition de données de l'abonné par la carte SIM C1, envoi de requêtes vers le réseau RR ou RTC, et interprétation de réponse aux requêtes. Tous les échanges de commandes et de réponses sont effectués entre la carte C2 et le terminal TE à travers la carte C1 qui donne l'illusion au terminal de contenir et d'exécuter elle-même le programme PA.

## Revendications

1. - Procédé pour préparer et exécuter une session de coopération avec une deuxième carte à puce (C2), introduite dans un terminal (TE) en addition d'une première carte à puce (C1), contenant des données liées au possesseur de la première carte, **caractérisé en ce que** les données de la deuxième carte (C2) sont communiquées au terminal (TE) par l'intermédiaire d'interrogations de la deuxième carte (c2) par la première carte (C1) et de transmission de résultats de ces interrogations par la première carte (c1) au terminal.

2. - Procédé conforme à la revendication 1, comprenant une interrogation de caractéristiques (CPA) dans la deuxième carte (C2) depuis la première carte (C1) en réponse à une introduction (E0) de la deuxième carte (C2) dans un moyen de lecture (35) relié au terminal, et une analyse (E2) des caractéristiques comparativement à des capacités matérielles et logicielles de la première carte et/ou du terminal pour refuser la deuxième carte lorsque lesdites caractéristiques sont incompatibles avec au moins le terminal.

3. - Procédé conforme à la revendication 1 ou 2, comprenant lors de la préparation d'exécution, une étape (E3) de transmettre des caractéristiques logicielles et matérielles (CT) du terminal (TE) depuis la première carte (C1) à la deuxième carte (C2).

4. - Procédé conforme à l'une quelconque des revendications 1 à 3, selon lequel le terminal (TE) est relié à un réseau de télécommunication, de préférence un réseau de radiotéléphonie (RR).

5. - Procédé conforme à l'une quelconque des revendications 1 à 4, selon lequel la première carte (c1) est une carte SIM d'identifiant d'abonné dans un réseau de télécommunication, de préférence un réseau de radiotéléphonie (RR).

6. - Procédé conforme à l'une quelconque des revendications 1 à 5, selon lequel la deuxième carte (c2) est une carte de visite.

7. - Procédé conforme à l'une quelconque des revendications 1 à 5, selon lequel la deuxième carte (c2) est une carte de jeux.
